# EUROPEAN PATENT SPECIFICATION

(11) **EP 2 368 031 B1**
(45) Date of publication and mention of the grant of the patent: **03.07.2019**
(21) Application number: 09830627.7
(22) Date of filing: 24.11.2009
(51) Int. Cl.: F02C 7/105, F02C 7/10, F02C 7/08, F02C 1/04, F28D 19/04

(54) **GAS TURBINE WITH EXTERNAL COMBUSTION, APPLYING A ROTATING REGENERATING HEAT EXCHANGER**
EINEN ROTIERENDEN REGENERATIONSWÄRMETAUSCHER VERWENDENDE GASTURBINE MIT ÄUSSERER VERBRENNUNG
TURBINE À GAZ À COMBUSTION EXTERNE UTILISANT UN ÉCHANGEUR DE CHALEUR À RÉGÉNÉRATION ROTATIF

(30) Priority: 24.11.2008 NO 20084943
(43) Date of publication of application: 28.09.2011
(73) Proprietor: Ares Turbine AS, 3550 Gol (NO)
(72) Inventor: KLEVEN, Ole, Bjorn, 3580 Geilo (NO)
(74) Representative: Acapo AS
(86) International application number: PCT/NO2009/000404
(87) International publication number: WO 2010/064921

(56) References cited:
- FR-A1- 2 916 240
- FR-A1- 2 916 240
- US-A- 3 641 763
- US-A- 4 062 190
- US-A- 5 873 250
- US-A1- 2004 123 603
- US-B1- 7 444 818

## Description

### Technical Field of the Invention

The present invention relates to a process and a plant for utilizing solid or particulate fuel as an energy source for gas turbines without first having to produce steam for producing work by using for example waste burning, coal combustion or burning pellets or the like.

### Background for the Invention

During recent years, technical solutions for transferring thermal energy into mechanical work have been proposed many. Since oil up to now has been relatively cheap, research and development have in general been focused on developing heat power machines using oil as an energy source. The situation of to-day is that the oil price is much higher than for example bio mass energy.

Several solutions for converting thermal energy from coal, bio energy and the like into mechanical work have been proposed. The proposed solutions propose to use steam powering turbines. Apart from the fact that such plants are large and complicated with respect to energy output, said solutions are well functioning solutions.

If a motor vehicle may be powered by bio energy, this will correspond to a petrol price of NOK 1,50 per litre. During the 1940ties it was common practise to power cars by means of wood generators, such powering being based on a pyrolyzisis process.

WO 02/055855 discloses a power generating system comprising a gas turbine, wherein the air flow between the compressor unit and the turbine unit is heated by means of a heat exchanger arranged in the combustor. According to this solution the air flow from the compressor unit to the turbine unit is kept separated from the flue gas produced in the combustion chamber, the expanded air from the turbine unit being supplied to the combustion chamber. The heat exchanger according to this solution is a stationary heat exchanger, the heat exchanger being formed in such way that parts of the heat exchanger during downtime have to be taken out at least partly for removing of carbon deposits and similar waste materials from the interior surfaces of the heat exchanger.

FR 2916240 describes a system for production of energy, applying a compressor unit and a turbine unit, where the air flow leaving the compressor unit passes through a rotating regenerative heat exchanger prior to entering the turbine unit. Heat energy is supplied to said air flow in the rotating regenerative heat exchanger by a counter flow of the hot flue gas from a combustor, combusting bio mass material.

US 5873250 describes an open-Brayton-cycle automotive power generation unit adapted to be energized by stored thermal energy.

### Summary of the Invention

An object of the present invention is to provide a gas turbine wherein the combustion is performed in the air flow downstream of the working turbine and still adding energy to the compressed air prior to being expanded by the working turbine unit.

A second object of the present invention is to enhance the energy conversion, reducing the requirement for down time due to repair, maintenance and cleaning of the various parts of the turbine system, including the heat exchanger.

A third object of the present invention is to improve the performance, efficiency and working life of the heat exchanger employed in the turbine system, also reducing possible downtime due to maintenance and repair operations.

A fourth object of the invention is to enable production of mechanical work and still avoiding the negative effect of hot carbon deposit or ash contaminated flue gas on the turbine unit.

Another object of the invention is to make it possible to drive a car for example on bio mass in the form of pellets or coal and to provide a complete gas turbine of a type having a weight/effect ratio surpassing the same for a conventional gasoline motor.

An even further object of the invention is to enable utilization of a solid or particulate fuel as an energy source for gas turbines without having to convert energy into steam as an intermediate phase.

A still further object of the present invention is to use other energy sources than oil for stationary and mobile energy production, for example for powering motor vehicles, motors etc.

The gas turbine according to the invention and having the features of claim 1, comprises a compressor unit and a turbine unit rotating on a common shaft, a combustion chamber and a rotating regenerative heat exchanger, wherein the combustion occurs in the air flow downstream of the turbine unit, the air flow between the compressor unit and the turbine unit being added thermal energy by a solid material which is heated up by the hot flue gas form the combustion.

According to the invention the system is preferably configured in such way that combustion gases do not come in contact with the turbine unit, heat being introduced in a continuous, step-less process into a cooler gas flow, thereby heating up such cooler gas flow and then returning the heating source to a thermal source for renewed heating.

According to the invention thermal energy may be brought into the air flow between the compressor unit and the turbine unit in a continuous or periodical manner by using a rotating regenerative heat exchanger, which is heated up by means of heat from the combustion chamber, to be introduced in and out of said air flow between the compressor unit and the turbine unit.

Since combustion occurs in the air flow downstream of the turbine unit, and since the combustion heat is exchanged with the compressed air flow between the compressor unit and the turbine unit, the following advantages are obtained compared with the prior art techniques, wherein combustion is directly performed in the combustion chamber between the compressor unit and the turbine unit:
- Residual heat in the air flow downstream of the turbine unit is forming a part of the combustion process and a smaller portion of the heat is lost in the flue gas.
- Fuel forming ash and carbon deposits may be used. Particles of carbon deposits and ash do not get into contact with the turbine runner. This is of a major importance since the turbine runner runs at rotational speed up towards the velocity of the sound. A carbon deposit particle hitting the turbine runner at such high speed will cause severe damage to said turbine part. An addition, it should be appreciated that carbon deposits and ash particles have an erosive and detrimental effect on the turbine runner.
- Combustion occurs at more or less atmospheric pres-sure. Combustion at such low pressure causes smaller volumes of NOₓ than combustion at high pressures in a combustion chamber between the compressor unit and the turbine unit.
- A still further advantage is that the main heat exchanger both is self-cleaning and in addition may be made more compact and substantially smaller in size than the prior art systems. This implies that the unit does not have to be cleaned as often as the conventional solutions.

A regenerative heat exchanger has a very large surface compared with the volume of the heat exchanger (up to 6000 m² per m³) and will accordingly provide a more compact and effective solution.

According to the present invention the surfaces of the heat exchanger may be of a catalytic type, such surfaces being coated for example with a platinum layer.

The objects may be met by introducing a by-pass line arranged between the exit of the compressor unit and the inlet of at least one regenerative heat exchanger, by-passing the combustion chamber, allowing a part of the compressed air from the compressor to by-pass the combustion chamber.

According to one embodiment of the invention, said by-passing air being is designed to cool down the exterior surface of the flue gas side of the at least one heat exchanger. The control valve may preferably be arranged upstream of the combustion chamber, directing at least part of the compressed air to the combustion chamber.

Further, the heat exchanger may be configured in such way that a part of the compressed air from the compressor is allowed to cool down at least the exterior surface of the flue gas side of the at least one regenerative heat exchanger.

According to a further embodiment of the invention, two or more regenerative heat exchangers receiving air form the compressor and heat from the combustion chamber (15) may be used, such two or more heat exchangers preferably being arranged in parallel.

Said at least one heat exchanger may be provided with a number of separated ducts arranged parallel with the main direction of flow of air, and which is configured in such way that parts of the ducts at any time are situated in the air flow between the compressor unit and the tur-bine unit for heating the air flow, and that the remaining part of the ducts are situated in the flue gas flow from the combustion chamber and thereby is heated up. The longitudinal axes of the ducts are skewed with respect to the axis of rotation of the at least one regenerative heat exchanger.

According to a further embodiment of the invention, a part of the openings for the inlet of compressed air through the at least one rotating heat exchanger is some-what rotationally displaced with respect to the outlets upstream of the turbine unit, so that a part of the compressed air flow is directed into the air flow from the combustion chamber, thereby as a consequence of this flushing flow, cleaning the ducts of the at least one regenerative heat exchanger for particles.

According to a still further embodiment of the invention, the work produced by the turbine is taken out as electrical energy via a generator; and the electrical energy is produced by the compressor unit, the rotor of which functioning as an generator generating electricity and that the stator unit is arranged around the compressor unit, such stator unit comprising one or more coils. In such case, the runner of the compressor unit may preferably be permanently magnetized. The runner of the compressor unit (11) is magnetized by means of an external magnetic field.

An additional advantage according to the present invention is that the heat exchanger may be more or less continuous cleaned in a manner removing possible carbon deposits or ash deposits on the heat exchanging surfaces of the regenerative heat exchanger without having to close down the plant.

### Short description of the Drawings

Embodiments of the invention shall now be described in more detail, referring to the drawings, where:
Figure 1 shows schematically and very simplified a sketch of the principle applied according to the present invention;
Figure 2 shows schematically and very simplified an embodiment where a rotating regenerative heat exchanger is used;
Figure 3 shows schematically and very simplified a rotating regenerative heat exchanger according to the present invention;
Figure 4 shows schematically and very simplified an embodiment having external combustion;
Figure 5 shows schematically a possible example of a rotating regenerative heat exchanger not falling within the scope of the claims of the present invention;
Figure 6 shows schematically a vertical section through the heat exchanger shown in Figure 5, seen along the line 6-6,
Figure 7 shows an arrangement, the compressor unit being formed as a permanent magnet and where the coil system is arranged around the compressor unit, the compressor unit thus functioning as a generator for generating electricity;
Figure 8 and 9 show an embodiment of the present invention, wherein part of the compressed air from the compressor unit may by-pass the combustion chamber; and
Figures 10 and 11 show a by-pass solution as shown in Figure 8 and 9, comprising two rotating regenerative heat exchangers according to the present invention.

### Detailed Description of the Invention

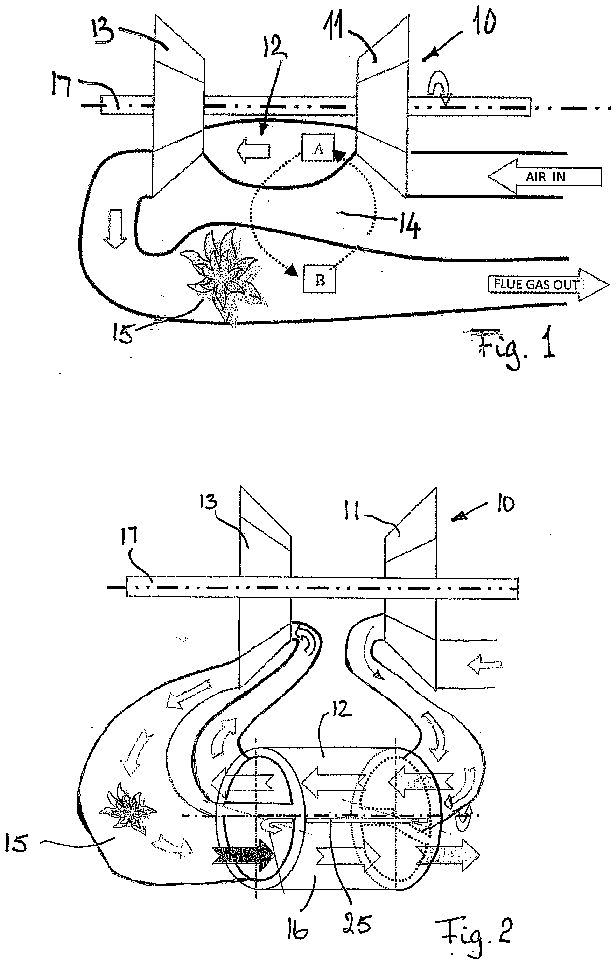

Figure 1 shows schematically and very simplified a sketch of the principle applied according to the present invention. A gas turbine 10 comprises a compressor unit 11 employed for compressing air from a pressure p₁ of 1 bar to a pressure p₂ of 2 bar, while the temperature as a consequence of the compression is increased from T₁ = 20°C to a temperature of T₂ = 200°C. Across the compressor unit the air velocity is increased from v₁ = 1 m/sec a velocity of v₂ = 0,86 m/sec. In the compression chamber 12 between the compressor unit 11 and the turbine unit 13 of the turbine 10, the compressed gas is heated further by means of a regenerative heat exchanger 14 to a temperature of T₂ = 800°C while the pressure is maintained at a pressure of p₃ = 2 bar. The velocity of the air is due to the heating increased to v₃ = 1, 83 m/sec. Then, the compressed and heated gas is directed to the turbine unit 13 where the air is expanded to a pressure of p₄ = 1 bar and where the temperature is reduced to T₄ = 50°C, while the velocity is increased to v₄ = 2,64 m/sec.

The expanded air is then directed to the combustion chamber 15 where the expanded air contributes to combustion of for example solid or particulate fuel, such as waste or bio masse such as pellets or the like. The combustion chamber 15 is for this purpose formed with inlet ducts (not shown) for supply of the fuel and means for removing ashes (not shown). At the outlet of the combustion chamber 15 the temperature T₅ = 900°C, while the pressure still is p₅ = 1 bar. The velocity has now increased to v₅ = 4 m/sec. The heated air is directed past that part B of the regenerative heat exchanger which at any time is situated within the combustion chamber 15. Such part B will become re-heated part and is repositioned to a position A inside the compressor chamber 12. The air which is re-heating said regenerative heat exchanger part B consist of a mixture of air and flue gasses from the combustion.

When this flue gas leaves the regenerative heat exchanger part B the pressure p₆ is still p₆ = 1 bar, while the temperature is reduced to T₆ = 300°C. The velocity is now reduced to v₆ = 0,86 m/sec.

The theoretical efficiency for this embodiment is η = 1-T₆/T₃ = 1- 573°K/1073°K ≈ 46%.

The compressor unit 11 is driven in a conventional manner by the turbine unit 13 through a common shaft 17.

For the solution according to Figure 1 particles of carbon deposits from the combustion gas will not come into contact with movable parts of the turbine unit 13. Further it will be possible to exploit residual heat in the air from the turbine unit 13 in that the residual heat together with the combustion heat are directed back upstream of the turbine unit 13 for heating the compressed air in the compression chamber 12. This is achieved by allowing the solid material to be heated in a position B, i.e. inside the combustion chamber, and in that the thermal energy in the solid material then is transferred to the compressed air in position A, i.e. in the compression chamber 12. According to this solution it is possible to use fuel in solid form or in particulate form, such as wooden chips, coal, bio pellets, without causing damage on the turbine unit 13.

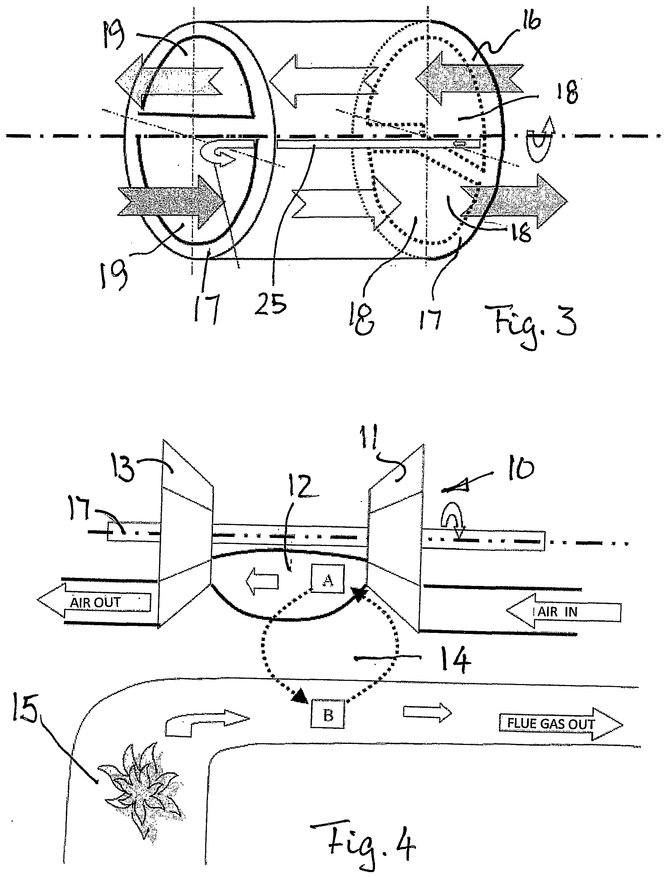

Figure 2 shows schematically a solution where the main difference resides in that a rotating regenerative heat exchanger 16 is used as a regenerative heat exchanger A,B. The construction and function of said rotating regenerative heat exchanger 15 will be described in more details with respect to Figure 3 below.

Figure 3 shows schematically and very simplified an embodiment of a rotating regenerative heat exchanger 16. Said heat exchanger 16 may comprise two end covers 17 having openings and a surrounding, gas tight jacket 18, surrounding the heat exchanging elements (not shown). The heat exchanging elements comprise a large number of parallel ducts which for example may have a tubular shape with a circular, triangular, hexagonal or polygonal cross section. If pipes having a circular cross sectional shape are used, the material in the pipe walls will be heated on both sides of the pipe wall, whereby the quantity of heat collected in the combustion chamber, and hence the quantity of heat delivered in the compression chamber, will increase.

As indicated in Figure 3 contaminated, heated hot gas is flowing from the combustion chamber 15 through the one half of the rotating regenerative heat exchanger 16, heating up this part, whereupon the cooled flue gas is emitted to atmosphere. Since the regenerative heat exchanger 16 rotates, in this shown embodiment anti-clockwise, new parts of the heated half of the regenerative heat exchanger will successively enter the compression chamber 12 and thereby into the compressed air flow from the compressor unit 11 of the turbine 10. Hence, the air flow is heated before the air flow is fed to the combustion chamber 15, while the part of the rotating regenerative heat exchanger will correspondingly be successively cooled. Hence, the process will be a continuous two-step cycle.

As indicated in Figure 3 the openings 18 in the end cover 17 for fresh air supply from the compressor 11 and correspondingly, the exit 18 for flue gas, will be rotationally displaced with respect to corresponding opening in the end cover 17 on the opposite end of the rotating regenerative heat exchanger 16. As indicated in Figure 3, this feature enables clean, compressed air to be back-flushed through the pipes marked 25 in that part which at any time during the rotation cycle first enters the compression chamber 12, so that any possibly present carbon deposits particles will be removed prior to possibly entering the compression chamber 12. Thus, the risks of causing damage to the turbine parts are reduced. The arrows in Figure 3 show direction of flow and rotation.

Figure 4 shows schematically a gas turbine with external combustion, provided with a regenerative heat exchanger arranged between the compression chamber 12 and downstream of the combustion chamber 15. According to this solution, the compressed air in the compression chamber, arranged between the compressor unit 11 and the turbine unit 12, is heated by means of the regenerative heat exchanger 14. The heat exchanger 14 collects heat from the flue gas and the flames in the combustion chamber 15 and functions in the same manner as described above. By heating up a solid material by means of an external combustion gas in position B and then transporting said solid material into the compression chamber 12, heat is transferred to the compressed fresh air in position A. The hot solid material 14 emits heat in position A to the compressed air from the compressor unit 11, whereupon the solid material 14 is transported back to position B where the solid material is re-heated by new heat from the combustion. This process is continuous in that several solid masses are incorporated into the heat transport between the positions B and A. The advantages obtained by this solution resides in that combustion occurs completely independent of the air flow of the turbine. Particles and carbon deposits from the combustion gasses will not come in contact with the moveable parts of the turbine. In particular, but not exclusively, this solution is suitable to be used for exploitation of combustion heat from for example waste incineration plants. It should be noted that regenerative, i.e. alternating heating and cooling of a material, is a very much more efficient heat transferring principle than heat transfer by means of a conductive heat exchanger. By employing such regenerative heat exchanger, it is possible to reduce the weight, volume and frequency of maintenance compared with other prior art heat exchangers, without reducing the effect output and heat transferring ability of the system.

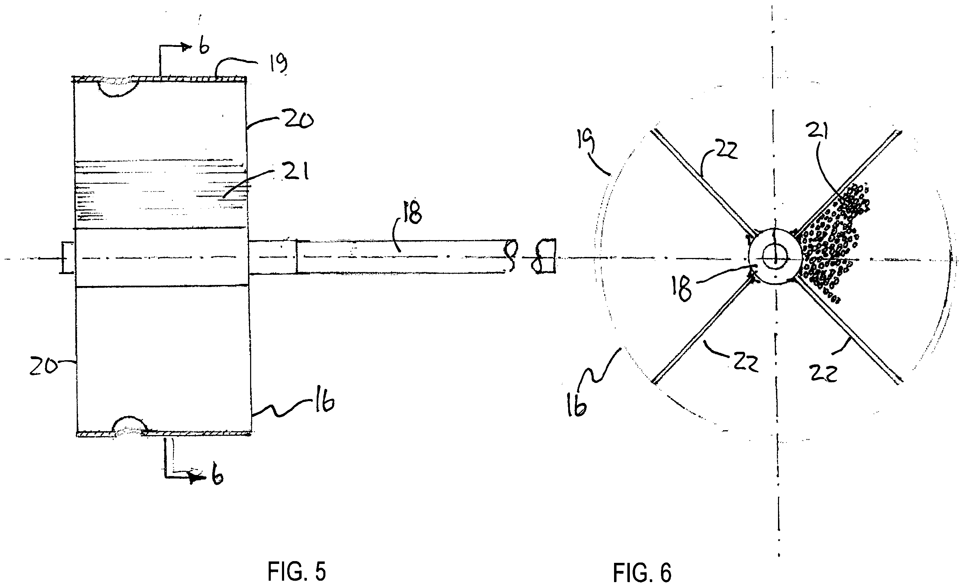

Figure 5 shows schematically, partly in section, a horizontal view through a rotating regenerative heat exchanger 16. The rotating regenerative heat exchanger 16 has, as indicated in Figure 6, a circular cross sectional area. Further, the heat exchanger is provided with a shaft 18 configured to be supported by bearings (not shown) so that a part of the heat exchanger at any time will be situated inside the combustion chamber 15 where the rotating heat exchanger 16 is heated up and where the other part being situated in the compression chamber 12 where the rotating heat exchanger 16 delivers heat to the compressed gas prior to such part entering the turbine unit 13. Since the heat exchanger 16 rotates, new heat from the combustion chamber 15 will continuously be supplied to the compression chamber 12.

Further, the rotating regenerative heat exchanger 16 is defined by a cylindrical body 19 which at each end is terminated by a more or less open end plate 10. Inter-nally, the heat exchanger 16 is provided with a large number of longitudinally arranged, open ducts which allow fluid flow through the ducts, but prevents a flow of gas in lateral direction. The ducts may preferably have a circular cross-section so that gas may flow through the ducts 21 and externally in the star cells established between adjacent pipes 21. It should be noted, however, that the pipes may have any suitable cross sectional shape, such as triangular, square or polygonal cross sectional shape.

Figure 6 shows a vertical section through the heat exchanger 16, shown in Figure 5, seen along the line 6-6 in Figure 5. As shown in Figure 6, the heat exchanger 16 is provided with walls 22 forming internal sectors. According to the embodiment shown in Figures 5 and 6, a very large number of straight, parallel, cylindrical pipe elements are used for transport of the hot flue gas from the combustion chamber through the rotating regenerative heat exchanger. It should be noted, however, that said pipe elements may be in the form of ducts having triangular, square or polygonal shape, without thereby deviating from the inventive idea. The ducts may also have a corrugated shape corresponding to the shape used in corrugated cardboards. According to the embodiment shown in Figures 5 and 6, the flue gas will flow both internally through the cylindrical ducts or pipes and through the ducts formed by the walls of adjacently arranged ducts. The purpose of the fins 22 is to stabilize bundles of pipes or ducts. It should in this connection be noted, however, that use of such fins are not compulsory, although such walls contribute to the rigidity of the circumferential wall 19 surrounding the pipe elements 21. Further, it should be noted that the present invention is not limited to use of four fins.

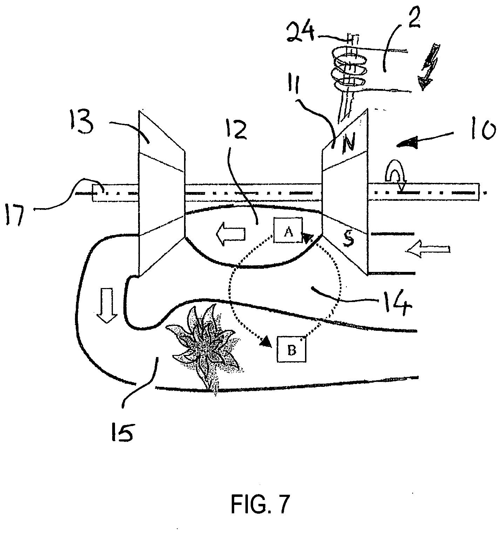

Figure 7 shows an alternative embodiment of the present invention. Principally this embodiment corresponds to the embodiment described in respect to the embodiment disclosed in Figure 1. The only major difference is in principle that the compressor unit 11 is formed as a permanent magnet having a north and south pole, and that one or more coils 23 having a magnet core 24 for generating electricity through rotation of the compressor unit 11 are arranged around the rotating compressor unit 11. Said coils 23 function as stator. It should be appreciated that said solution is shown in a schematic manner and details are not shown.

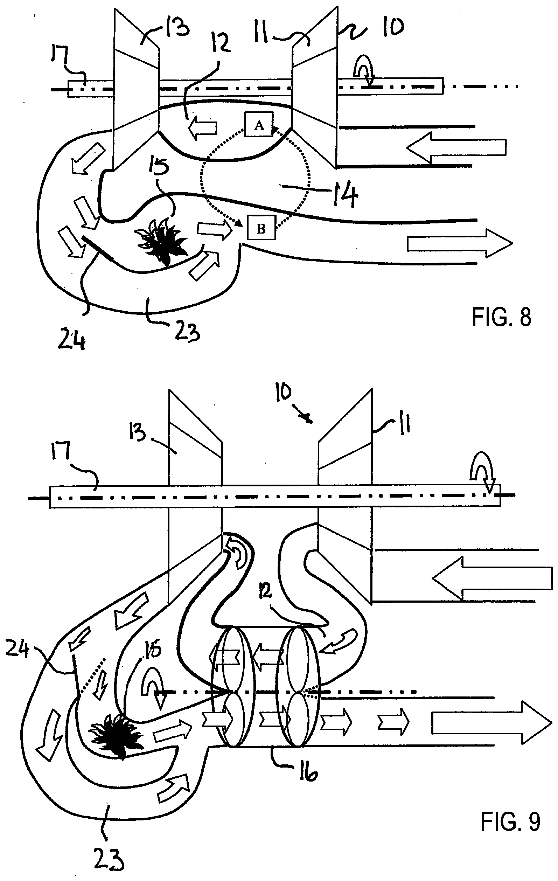

Figure 8 shows an embodiment where a main difference compared with the embodiments shown above resides in that the system is provided with a by-pass 23. Otherwise, the embodiment shown in Figure 8 corresponds to the embodiment disclosed in Figure 1. Figure 9 shows an embodiment related to use of a rotating regenerative heat exchanger 16. The embodiment shown in Figure 9 corresponds to the embodiment shown in Figure 2, apart for the introduction of the by-pass line 23.

Experiments have shown that the temperature of the flue gas side of the rotating regenerative heat exchanger 16 becomes excessively high due to the high temperature gas produced by the combustion chamber 15, causing smelt down at least of parts of the heat exchanger 16. In order to reduce such excessively high temperature of the heat exchanger 16, a part of compressed air is allowed to pass outside the combustor chamber 15, and is then directed into the regenerative heat exchanger 14/the rotating regenerative heat exchanger 16, together with hot gas from the combustion chamber 15. The gas which is by-passing the combustion chamber 15 is allowed to flow along the exterior of the regenerative heat exchanger, thereby cooling said heat exchanger down, for example to 600°C. In order to be able to control the temperature of the heat exchanger 14,16, a valve/flap 24 of a suitable type may be provided, regulating the amount of compressed air with a lower temperature to by-pass the combustion chamber 15, thereby securing that the temperature at the combustion side of the heat exchanger 14,16 remains within the allowable, safe ranges. Such safe working area is in the order of 900-1000°C. The amount of air from the compressor unit 13 by-passing the combustion chamber 15 is within the range 30-50% of the total amount, preferably around 45% of the total amount delivered by the compressor.

It should be appreciated that for increasing the allowable temperature under which the heat exchanger 16 is allowed to work, the heat exchanging surfaces of the regenerative heat exchanger according to the present invention may be coated with a catalytic coating, such as for example a platinum coating. The material of the heat exchanger may preferably be a high temperature resisting Ni-steel alloy.

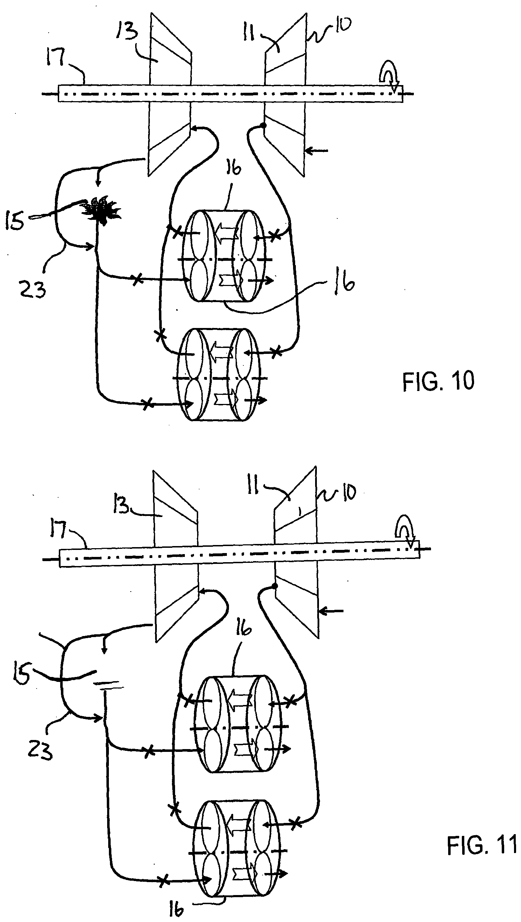

Figures 10 and 11 show an alternative embodiment of the embodiment shown in Figure 9, the only difference being that two rotating regenerative embodiments are shown in lieu of one. The system according to these Figures also includes a valve and a by-pass line for the same purposes as indicated above.

Although Figures 10 and 11 show an embodiment based on two rotating regenerative heat exchanger in parallel, it should be appreciated that said number may be higher, i.e. three or more.

It should be noted that the end cover in front and at the rear end of the heat exchanger will, due to the varying, high temperatures appearing in the heat exchanger causes temperature expansion and creep in the structure. In order to compensate for such changes in dimensions due to expansion, said plates may be provided with an expansion means allowing change of dimensions due to varying temperature.

It should also be appreciated that the shaft of said rotating regenerative heat exchanger may be cooled so as to maintain an acceptable temperature in the shaft, avoiding complicated bearings and construction.

According to the embodiments shown, the ducts 21 forming an integral part of the rotating regenerative heat exchanger 16 are arranged in parallel with the rotational axis of the heat exchanger. It should be appreciated, however, that the axes of the ducts 21 of the heat exchanger may form an angle with the axis of rotation of the heat exchanger. Further, the exit temperature from the regenerative heat exchangers may preferably be in the order of about 200°C.

Further, experiments have shown that the turbine may rotate with a rotational speed close to the velocity of sound, for example at 120,000 r.p.m. It should also be appreciated that according to the present invention the regenerative heat exchanger is arranged in the close vicinity of the turbine, whereby the high rotational speed of the turbine causes high or ultra high frequent vibrations in the heat exchanger, thereby preventing or at least partly hindering the carbon deposits to fasten to the duct walls, enhancing the service life of the system.

## Claims

1. Gas turbine (10) for transforming thermal energy, for example from coal, bio mass or the like, into mechanical work, comprising a compressor unit (11) and a turbine unit (13) rotating on a common shaft; at least one a regenerative, rotatable heat exchanger (16) arranged between the outlet of compressor unit (11) and the inlet to the turbine unit (13), a combustion chamber (15) and an associated pipe system, the regenerative heat exchanger supplying heat to the air flow from the compressor unit (11) to the turbine unit (13) by means of hot flue gas from the combustion chamber (15);
wherein the combustion is performed in the air flow downstream of the turbine unit (13); and
wherein the regenerative heat exchanger comprises a number of parallel, separated duct elements (21) open at both ends, parallel or skewed with the axis of rotation of the rotating regenerative heat exchanger and configured to allow a separated two-ways flow through the rotating regenerative heat exchanger;
**characterised in that**:
a by-pass line (23) is arranged between the exit of the compressor unit (13) and the inlet of the at least one regenerative heat exchanger (16), by-passing the combustion chamber, allowing a part of the compressed air from the compressor to by-pass the combustion chamber (15) and then to be directed into the rotating regenerative heat exchanger and into the hot gas from the combustor chamber (15).

2. Gas turbine (10) according to claim 1, wherein a control valve is arranged upstream of the combustion chamber, directing at least part of the compressed air to the combustion chamber.

3. Gas turbine (10) according to claim 1 or 2, wherein the heat exposed interior surfaces of the rotating regenerative heat exchanger are coated with a catalytic coating, such as for example a platinum coating.

4. Gas turbine (10) according to one of the claims 1-3, wherein the at least one heat exchanger (16) is provided with a number of separated ducts (21) arranged parallel with the main direction of flow of air, and which is configured in such way that parts of the ducts (21) at any time are situated in the air flow between the compressor unit (11) and the turbine unit (13) for heating the air flow, and that the remaining part of the ducts (21) are situated in the flue gas flow from the combustion chamber (15) and thereby is heated up.

5. Gas turbine (10) according to claim 4, wherein the longitudinal axes of the ducts (21) are skewed with respect to the axis of rotation of the at least one regenerative heat exchanger.

6. Gas turbine (10) according to claim 5, wherein the part of the openings for the inlet of compressed air through the at least one rotating heat exchanger (16) is somewhat rotationally displaced with respect to the outlets upstream of the turbine unit (13), so that a part of the compressed air flow is directed into the air flow from the combustion chamber (15), thereby as a consequence of this flushing flow, cleaning the ducts (21) of the at least one regenerative heat exchanger for particles.

7. Gas turbine (10) according to one of the claims 1-6, wherein the electrical energy is produced by the compressor unit, the rotor of which functioning as an generator generating electricity and that the stator unit (24) is arranged around the compressor unit (11), such stator unit (24) comprising one or more coils.

8. Gas turbine (10) according to claim 1, wherein the runner of the compressor unit (11) is permanently magnetized.

9. Gas turbine (10) according to claim 8, wherein the runner of the compressor unit (11) is magnetized by means of an external magnetic field.

## Patentansprüche

1. Gasturbine (10) zum Umwandeln von thermischer Energie, zum Beispiel von Kohle, Biomasse oder ähnlichem, in mechanische Arbeit, die eine Kompressoreinheit (11) und eine Turbineneinheit (13), die sich auf einer gemeinsamen Welle drehen; mindestens einen drehbaren Regenerationswärmetauscher (16), der zwischen dem Ausgang der Kompressoreinheit (11) und dem Eingang der Turbineneinheit (13) angeordnet ist, eine Brennkammer (15) und ein zugehöriges Rohrleitungssystem aufweist, wobei der Regenerationswärmetauscher den Luftstrom von der Kompressoreinheit (11) zu der Turbineneinheit (13) mit Hilfe von heißem Abgas von der Brennkammer (15) mit Wärme versorgt;
wobei die Verbrennung in dem Luftstrom stromab der Turbineneinheit (13) durchgeführt wird; und
wobei der Regenerationswärmetauscher eine Anzahl von parallelen, getrennten Leitungselementen (21) aufweist, die an beiden Enden offen, parallel oder schräg zur Drehachse des drehbaren Regenerationswärmetauschers sind, und die dazu eingerichtet sind, einen getrennten Zwei-Wege-Fluss durch den drehbaren Regenerationswärmetauscher zu ermöglichen;
**dadurch gekennzeichnet, dass**:
eine Umgehungsleitung (23) zwischen dem Ausgang der Kompressoreinheit (11) und dem Eingang des mindestens einen Regenerationswärmetauschers (16) angeordnet ist, die die Brennkammer umgeht, wodurch ermöglicht wird, dass ein Teil der komprimierten Luft von dem Kompressor die Brennkammer (15) umgeht und anschließend in den drehbaren Regenerationswärmetauscher und in das heiße Gas von der Brennkammer (15) geleitet wird.

2. Gasturbine (10) nach Anspruch 1, wobei ein Stellventil stromauf der Brennkammer angeordnet ist, das zumindest einen Teil der komprimierten Luft in die Brennkammer leitet.

3. Gasturbine (10) nach Anspruch 1 oder 2, wobei die der Wärme ausgesetzten Innenflächen des drehbaren Regenerationswärmetauschers mit einer katalytischen Beschichtung wie zum Beispiel einer Platinbeschichtung beschichtet sind.

4. Gasturbine (10) nach einem der Ansprüche 1 bis 3, wobei der mindestens eine Wärmetauscher (16) mit einer Anzahl von getrennten Leitungen (21) versehen ist, die parallel mit der Hauptströmungsrichtung der Luft angeordnet sind, und der derart eingerichtet ist, dass Teile der Leitungen (21) zu jeder Zeit in dem Luftstrom zwischen der Kompressoreinheit (11) und der Turbineneinheit (13) zum Wärmen des Luftstroms gelegen sind, und dass der verbleibende Teil der Leitungen (21) in dem Abgasstrom von der Brennkammer (15) gelegen ist und dadurch aufgeheizt wird.

5. Gasturbine (10) nach Anspruch 4, wobei die Längsachsen der Leitungen (21) schräg bezüglich der Drehachse des mindestens einen Regenerationswärmetauschers sind.

6. Gasturbine (10) nach Anspruch 5, wobei der Teil der Öffnungen für den Einlass von komprimierter Luft durch den mindestens einen drehbaren Wärmetauscher (16) in gewisser Weise drehmäßig bezüglich der Ausgänge stromauf der Turbineneinheit (13) verschoben ist, so dass ein Teil des komprimierten Luftstroms in den Luftstrom von der Brennkammer (15) geleitet wird, wodurch in der Folge dieses Spülflusses die Leitungen (21) des mindestens einen Regenerationswärmetauschers von Partikeln gereinigt werden.

7. Gasturbine (10) nach einem der Ansprüche 1-6, wobei die elektrische Energie durch die Kompressoreinheit erzeugt wird, deren Rotor als ein Generator wirkt, der Strom erzeugt, und dass die Statoreinheit (24) um die Kompressoreinheit (11) angeordnet ist, wobei eine solche Statoreinheit (24) eine oder mehrere Windungen aufweist.

8. Gasturbine (10) nach Anspruch 1, wobei der Läufer der Kompressoreinheit (11) permanent magnetisiert ist.

9. Gasturbine (10) nach Anspruch 8, wobei der Läufer der Kompressoreinheit (11) mittels eines externen Magnetfelds magnetisiert ist.

## Revendications

1. Turbine à gaz (10) pour transformer de l'énergie thermique, par exemple qui est issue du charbon, d'une biomasse ou similaire, selon un travail mécanique, comprenant une unité de compresseur (11) et une unité de turbine (13) qui sont entraînées en rotation sur un arbre commun ; au moins un échangeur thermique régénératif pouvant être entraîné en rotation (16) qui est agencé entre la sortie de l'unité de compresseur (11) et l'entrée sur l'unité de turbine (13), une chambre de combustion (15) et un système de tuyaux associé, l'échangeur thermique régénératif alimentant de la chaleur sur l'écoulement d'air qui va depuis l'unité de compresseur (11) jusqu'à l'unité de turbine (13) au moyen du gaz de combustion chaud qui provient de la chambre de combustion (15) ; dans laquelle :
la combustion est réalisée dans l'écoulement d'air en aval de l'unité de turbine (13) ; et
l'échangeur thermique régénératif comprend un certain nombre d'éléments de conduit séparés parallèles (21) qui sont ouverts au niveau des deux extrémités, qui sont parallèles ou qui sont asymétriques par rapport à l'axe de rotation de l'échangeur thermique régénératif rotatif et qui sont configurés de manière à ce qu'ils permettent un écoulement à deux voies séparées au travers de l'échangeur thermique régénératif rotatif ;
**caractérisée en ce que** :
une ligne de dérivation (23) est agencée entre la sortie de l'unité de compresseur (13) et l'entrée de l'au moins un échangeur thermique régénératif (16), elle dérive la chambre de combustion (15), et elle permet qu'une partie de l'air comprimé en provenance du compresseur dérive la chambre de combustion (15) et soit ensuite dirigée à l'intérieur de l'échangeur thermique régénératif rotatif et à l'intérieur du gaz chaud qui provient de la chambre de combustion (15).

2. Turbine à gaz (10) selon la revendication 1, dans laquelle une vanne de commande est agencée en amont de la chambre de combustion, laquelle dirige au moins une partie de l'air comprimé sur la chambre de combustion.

3. Turbine à gaz (10) selon la revendication 1 ou 2, dans laquelle les surfaces intérieures exposées à la chaleur de l'échangeur thermique régénératif rotatif sont revêtues d'un revêtement catalytique tel que par exemple un revêtement en platine.

4. Turbine à gaz (10) selon l'une des revendications 1 à 3, dans laquelle l'au moins un échangeur thermique (16) est muni d'un certain nombre de conduits séparés (21) qui sont agencés en parallèle à la direction principale de l'écoulement d'air, et lequel au moins un échangeur thermique est configuré de telle sorte que des parties des conduits (21) soient en permanence situées dans l'écoulement d'air entre l'unité de compresseur (11) et l'unité de turbine (13) pour chauffer l'écoulement d'air, et de telle sorte que la partie restante des conduits (21) soit située dans l'écoulement de gaz de combustion qui provient de la chambre de combustion (15) et soit ainsi chauffée.

5. Turbine à gaz (10) selon la revendication 4, dans laquelle les axes longitudinaux des conduits (21) sont asymétriques par rapport à l'axe de rotation de l'au moins un échangeur thermique régénératif.

6. Turbine à gaz (10) selon la revendication 5, dans laquelle la partie des ouvertures pour l'entrée d'air comprimé au travers de l'au moins un échangeur thermique rotatif (16) est quelque peu déplacée en rotation par rapport aux sorties en amont de l'unité de turbine (13), de telle sorte qu'une partie de l'écoulement d'air comprimé soit dirigée à l'intérieur de l'écoulement d'air qui provient de la chambre de combustion (15), d'où ainsi, en tant que conséquence de cet écoulement à effet de lavage, le nettoyage, en termes d'enlèvement de particules, des conduits (21) de l'au moins un échangeur thermique régénératif.

7. Turbine à gaz (10) selon l'une des revendications 1 à 6, dans laquelle l'énergie électrique est produite par l'unité de compresseur dont le rotor fonctionne en tant que générateur qui génère de l'électricité et dont l'unité de stator (24) est agencée autour de l'unité de compresseur (11), cette unité de stator (24) comprenant une ou plusieurs bobine (s) .

8. Turbine à gaz (10) selon la revendication 1, dans laquelle la roue de l'unité de compresseur (11) est magnétisée en permanence.

9. Turbine à gaz (10) selon la revendication 8, dans laquelle la roue de l'unité de compresseur (11) est magnétisée au moyen d'un champ magnétique externe.
